# EUROPEAN PATENT APPLICATION

(11) **EP 4 269 902 A2**
(43) Date of publication of application: **01.11.2023**
(21) Application number: 23169579.2
(22) Date of filing: 24.04.2023
(51) Int. Cl.: F24H 4/02, F24H 9/02, F24H 9/13, F24H 9/20, F24H 15/242, F24H 15/305, F24H 15/407, F24H 4/04

(54) **A HEAT PUMP UNIT AND A SPLIT HEAT PUMP WATER HEATER**

(30) Priority: 27.04.2022 CN 202210447486
(71) Applicant: Zhengzhou Haier New Energy Technology Co., Ltd., Zhengzhou, Henan 450000 (CN); Qingdao Economic and Technological Development Zone Haier Water Heater Co., Ltd., Qingdao City, Shangdong 266000 (CN); Haier Smart Home Co., Ltd., Qingdao City, Shandong 266000 (CN)
(72) Inventor: LIU, Dongping, Qingdao City, 266000 (CN); CHEN, Bingquan, Qingdao City, 266000 (CN); LIU, Xiaojun, Qingdao City, 266000 (CN)
(74) Representative: Cabinet Beau de Loménie

(57) **Abstract**

The invention provides heat pump unit and a split heat pump water heater, the heat pump unit comprises: a housing with an air inlet and an air outlet opened thereon; an heat exchanger (2); a centrifugal fan (3) comprising a volute and centrifugal vanes, wherein the volute is provided with an air suction port and an air exhaust port, the centrifugal vanes are arranged in the volute and the volute is provided with a positioning installation part (311); and a water receiving tray being provided with a guide installation part (41); wherein the heat exchanger (2) and the centrifugal fan are located in the housing, and the heat exchanger is disposed on the water receiving tray, the air suction port is arranged opposite to the heat exchanger, the air exhaust port is connected to the air outlet; the guide installation part (41) and the positioning installation part (311) are in an insert fit and the guide installation part is constructed such that the positioning installation part is slidably inserted onto the guide installation part; in which a centrifugal fan can be quickly and accurately assembled to improve the assembly precision and the qualified rate of products.

## Description

### Technical field

The invention belongs to the technical field of household appliances, in particular to a heat pump unit and a split heat pump water heater.

### Background

At present, water heaters are household appliances that are widely used in people's daily lives. Water heaters are generally divided into electric water heaters, gas water heaters and heat pump water heaters, and heat pump water heaters are widely used because of their high energy efficiency.

A heat pump water heater generally comprises a heat pump unit and a water tank, wherein the heat pump unit comprising a compressor, an heat exchanger and a fan, while the water tank generally comprising a casing, an inner tank and a condenser. For example, the Chinese patent (publication number CN214665205U) discloses an air-source heat pump water heater unit, in which an air inlet and an air outlet are provided on the housing, and an evaporator, a compressor and a fan are arranged in the housing. However, in order for a centrifugal fan to be assembled, it must not only be firmly and reliably installed, but it must also be accurately docked with the air outlet 1002 on the housing. However, due to the influence of component installation errors, it is easy for the volute 31of the centrifugal fan 3 to be misaligned with the air outlet 1002, resulting in low assembly accuracy and a reduced product qualification rate.

In view of this, how to design a heat pump water heater that improves the assembly accuracy and improves the product qualification rate is the technical problem to be solved by the present invention.

### Summary

The invention provides heat pump unit and a split heat pump water heater, in which a centrifugal fan can be quickly and accurately assembled to improve the assembly precision and the qualified rate of products.

In order to achieve the above-mentioned technical purpose, the present invention adopts the following technical solutions to realize:
In one aspect, the present invention provides a heat pump, it comprises:
a housing with an air inlet and an air outlet opened thereon;
an heat exchanger;
a centrifugal fan comprising a volute and centrifugal vanes, wherein the volute is provided with an air suction port and an air exhaust port, the centrifugal vanes are arranged in the volute and the volute is provided with a positioning installation part ;and a water receiving tray being provided with a guide installation part ;
wherein the heat exchanger and the centrifugal fan are located in the housing, and the heat exchanger is disposed on the water receiving tray, the air suction port is arranged opposite to the heat exchanger, the air exhaust port is connected to the air outlet; the guide installation part and the positioning installation part are in an insert fit and the guide installation part is constructed such that the positioning installation part is slidably inserted onto the guide installation part.

By correspondingly setting the positioning installation part on the volute of the centrifugal fan and the guide installation part on the partition plate, the centrifugal fan could be fixed on the partition plate by connecting the positioning installation part and the guide installation part. With respect to the positioning installation part and the guide installation part, the guide installation part could guide the positioning installation part when mounting the centrifugal fan, so that the positioning installation part could slide along the guide installation part and be accurately fitted to each other, thus ensuring that the centrifugal fan could be accurately mounted, and also that the air outlet of the centrifugal fan could be accurately aligned with the air outlet, so that the centrifugal fan could be quickly and accurately mounted in place to improve assembly accuracy and product qualification rate.

In an embodiment of the present invention, the bottom of the volute is provided with two positioning installation parts, and the water receiving tray is provided with guide installation parts corresponding to the positioning installation parts.

In an embodiment of the present invention, the guide installation part is a first positioning protrusion provided on the volute, and the positioning installation part is a first positioning groove formed on the water receiving tray, and the first positioning protrusion is inserted into the corresponding first positioning groove.

In an embodiment of the present invention, the two first positioning protrusions are arranged obliquely and close to each other.

In an embodiment of the present invention, the angle between the outer sidewalls of the two first positioning protrusions is 30°-60 °.

In an embodiment of the present invention, the inner wall of the first positioning groove close to the outer side forms an inclined surface matching the outer sidewall of the first positioning protrusion.

In an embodiment of the present invention, the cross-sectional area of the first positioning protrusion gradually decreases along the direction away from the water receiving tray, the first positioning groove forms a bell mouth structure, and the inner contour of the first positioning groove matches the outer contour of the first positioning protrusion.

In an embodiment of the present invention, the guide installation part is a second positioning groove formed on the volute, the positioning installation part is a second positioning protrusion provided on the water receiving tray, and the second positioning protrusion is inserted into the corresponding second positioning groove.

In an embodiment of the present invention, the volute is opened with a mounting hole penetrating the positioning installation part, and the guide installation part is provided with a threaded hole, and a screw is passed through the mounting hole and is screwed into the threaded hole.

In an embodiment of the present invention, a flange structure is provided at an end of the volute away from the positioning installation part, the flange structure is overlapped on the heat exchanger, and the heat exchanger is disposed between the flange structure and the water receiving tray.

Another aspect of the present invention provides a split heat pump water heater comprising a water tank and a heat pump unit and the water tank and the heat pump unit are connected by refrigerant pipes and cables, characterized in that, the heat pump unit is the heat pump unit as mentioned above.

In an embodiment of the present invention, the water tank comprises the housing and an inner tank disposed in the housing, the water inlet pipe and the water outlet pipe are disposed on the inner tank;
the split heat pump water heater further comprises a leak-proof device ;
the leak-proof device comprising:
   a first water pipe provided with a first water inlet pipe end, a first connecting pipe end and a first water outlet pipe end, in which a first connecting flow passage is formed, a first end of the first connecting flow passage communicating with the first water inlet pipe end, and a second end of the first connecting flow passage communicating with the first water outlet pipe end;
   a second water pipe provided with a second water inlet pipe end, a second connecting pipe end and a second water outlet pipe end communicating with each other, the second water inlet pipe end being provided with a one-way valve 8 used to control the one-way water flow from the second water inlet pipe end to the second water pipe ;
   a pressure on/off valve disposed in the first connecting pipe end and used to open or close the second end of the first connecting flow passage according to the water pressure at the first connecting pipe end ; and
   a connecting pipe connected between the first pipe connecting pipe end and the second pipe connecting pipe end ;
   wherein the first water outlet pipe end is connected to the water inlet pipe and the second water inlet pipe end is connected to the water outlet pipe.

### Description of the drawings

In order to more clearly illustrate the technical solutions in the embodiments of the present invention or the prior art, the drawings to be used in the description of the embodiments or the prior art are briefly introduced below. Obviously, the accompanying drawings and the following description are provided by way of example only and relate to some exemplary embodiments of the present invention. Those skilled in the art will be able to obtain other embodiments from these drawings and description without any creative effort.
Fig.1 is a first structural schematic view of a heat pump unit according to an embodiment of the present invention;
Fig.2 is a first partial structural schematic view of a heat pump unit according to an embodiment of the present invention;
Fig.3 is a second partial structural schematic view of a heat pump unit according to an embodiment of the present invention;
Fig. 4 is a structural view of a centrifugal fan according to an embodiment of the present invention;
Fig. 5 is an exploded view of a centrifugal fan according to an embodiment of the present invention;
Fig.6 is a second structural schematic view of a water tank according to an embodiment of the present invention;
Fig.7 is a first structural schematic view of a leak-proof device according to an embodiment of the present invention;
Fig.8 is a second structural schematic view of a leak-proof device according to an embodiment of the present invention;
Fig.9 is a sectional view along A-A in Fig.8;
Fig.10 is a sectional view along B-B in Fig.8;
Fig.11 is a partially enlarged schematic view of area C in Fig.9;
Fig.12 is a schematic structural view of a first water pipe according to an embodiment of the present invention;
Fig.13 is a sectional view of the first water pipe according to an embodiment of the present invention;
Fig.14 is a schematic structural view of a second water pipe according to an embodiment of the present invention;
Fig.15 is a sectional view of a second water pipe according to an embodiment of the present invention;
Fig.16 is a schematic structural view of the pressure on/off valve according to an embodiment of the present invention;
Fig.17 is an exploded view of the pressure on/off valve according to an embodiment of the present invention;
Fig.18 is a cross-sectional view of the flexible sealing member according to an embodiment of the present invention.

### Detailed Description

In order to make the purpose, technical solutions and advantages of the embodiments of the present invention clearer, the technical solutions in the embodiments of the present invention will be clearly and completely described below in conjunction with the drawings in the embodiments of the present invention. Obviously, the described embodiments It is a part of embodiments of the present invention, but not all embodiments. Based on the embodiments of the present invention, all other embodiments obtained by persons of ordinary skill in the art without making creative efforts belong to the protection scope of the present invention.

It should be noted that, in the description of the present invention, the terms "up", "down", "left", "right", "vertical", "horizontal", "inner", "outer" and the like indicate directions or positions The terms of relationship are based on the orientation or positional relationship shown in the drawings, which are for convenience of description only, and do not indicate or imply that the device or element must have a specific orientation, be constructed and operated in a specific orientation, and therefore cannot be interpreted as Limitations on the Invention. In addition, the terms "first" and "second" are used for descriptive purposes only, and should not be understood as indicating or implying relative importance.

The present invention provides a heat pump water heater, which typically comprises a heat pump unit and a water tank. The heat pump unit includes a housing and components such as a compressor, an evaporator, a throttling device and a centrifugal fan mounted in the housing, and the water tank includes a shell, an inner liner and a condenser.

The compressor, the evaporator, the throttling device and the condenser are connected to form a refrigerant circuit to heat the water in the water tank using the principle of a conventional heat pump. The basic configuration of a conventional heat pump is not restricted or detailed here.

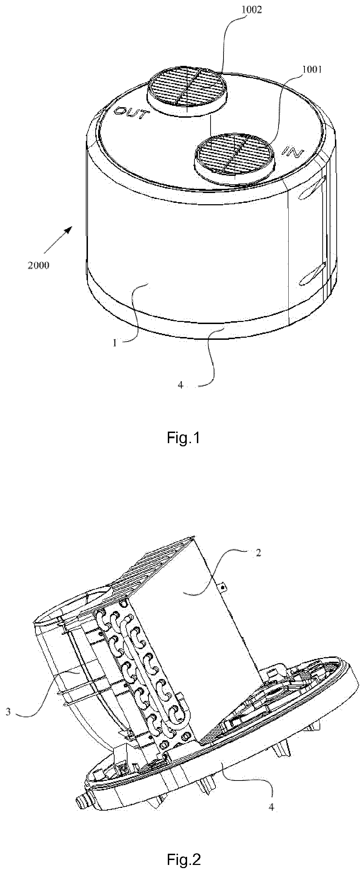

As shown in Fig.1 to Fig.5, a heat pump unit provided in the present embodiment comprises:
a housing 1 with an air inlet 1001 and an air outlet 1002 opened thereon;
an heat exchanger 2;
a centrifugal fan 3 comprising a volute 31 and centrifugal vanes 32, wherein the volute 31 is provided with an air suction port 3001 and an air exhaust port 3002, the centrifugal vanes 32 are arranged in the volute 31 and the volute 31 is provided with a positioning installation part 311; and
a water receiving tray 4, the water receiving tray 4 being provided with a guide installation part 41;
wherein the heat exchanger 2 and the centrifugal fan 3 are located in the housing 1, and the heat exchanger 2 is disposed on the water receiving tray 4, the air suction port 3001 is arranged opposite to the heat exchanger 2, the air exhaust port 3002 is connected to the air outlet 1002; the guide installation part 41 and the positioning installation part 311 are in an insert fit and the guide installation part 41 is constructed such that the positioning installation part 311 can be slidably inserted onto the guide installation part 41.

Specifically, the heat pump unit is a separate component; its application is a split heat pump water heater, which, when in use, can be installed outdoors as an outdoor unit, and the heat exchanger is connected to the condenser in the indoor water tank via a refrigerant pipe.

During the assembly process, the centrifugal fan 3 is assembled on the water receiving tray 4 and the mounting of the centrifugal fan 3 is achieved by connecting the positioning installation part 311 on the volute 31 and the guide installation part 41 on the water receiving tray 4, so that the guide installation part 41 could meet the requirement of being connected to the positioning installation part 311 for positioning and fixing, and further the guide installation part 41 could guide the positioning installation part 311 to be accurately assembled to improve the assembly accuracy.

In this way, after the centrifugal fan 3 is mounted on the water receiving tray 4, the positioning installation part 311 can cooperate with the guide installation part 41 to improve the accuracy of the mounting position of the centrifugal fan 3, thereby facilitating a quick and accurate installation by the on-site operator. Furthermore, after the centrifugal fan 3 is mounted in place, the air exhaust port 3002 of the centrifugal fan 3 can be more accurately aligned with the air outlet 1002.

By correspondingly setting the positioning installation part 311 on the volute 31 of the centrifugal fan 3 and the guide installation part 41 on the water receiving tray 4, the centrifugal fan 3 could be fixed on the water receiving tray 4 by connecting the positioning installation part 311 and the guide installation part 41. With respect to the positioning installation part 311 and the guide installation part 41, the guide installation part 41 could guide the positioning installation part 311 when mounting the centrifugal fan 3, so that the positioning installation part 311 could slide along the guide installation part 41 and be accurately fitted to each other, thus ensuring that the centrifugal fan 3 could be accurately mounted, and also that the air outlet 1002 of the centrifugal fan 3 could be accurately aligned with the air outlet 1002, so that the centrifugal fan 3 could be quickly and accurately mounted in place to improve assembly accuracy and product qualification rate.

In an embodiment of the present application, the bottom of the volute 31 is provided with two positioning installation parts 311, and the water receiving tray 4 is provided with guide installation parts 41 corresponding to the positioning installation parts 311.

In particular, in order to improve the connection reliability, two positioning installation parts 311 are disposed at the bottom of the volute 31, and the two positioning installation parts 311 could serve as a good support for the volute 31 at the bottom; in addition, during the assembly process, the guide installation parts 41 correspondingly disposed on the water receiving tray 4 could guide and fix the two positioning installation parts 311 on the volute 31, respectively, so as to further improve the assembly accuracy.

In some embodiments of the present invention, after the positioning installation part 311 and the guide installation part 41 are fitted in place, in order to securely and reliably connect the volute 31 and the water receiving tray 4, the volute 31 is opened with a mounting hole 312 penetrating the positioning installation part 311, and the guide installation part 41 is provided with a threaded hole (not shown in the figures), and a screw is passed through the mounting hole 312 and is screwed into the threaded hole.

In particular, in the assembly process, the assembler could first fit the positioning installation part 311 with the guide installation part 41 to pre-assemble the centrifugal fan 3 on the water receiving tray 4, and then pass the screw from the side of the volute 31 of the centrifugal fan 3 through the mounting hole 312 and screw it into the threaded hole.

In this way, the centrifugal fan 3 and the water receiving tray 4 are further fastened by a screw, which is more conducive to improving the connection reliability between the two, thereby reducing the possibility of the centrifugal fan 3 falling off due to a fastening failure. Furthermore, a good fit has been maintained between the air exhaust port 3002 and the air outlet 1002 for the centrifugal fan 3 whose position has been adjusted.

In an embodiment of the present invention, various structural forms can be adopted for the concrete manifestations of the positioning installation part 311 and the guide installation part 41, which will be described below with reference to the accompanying drawings.

The guide installation part 41 is a first positioning protrusion provided on the volute (31), and the positioning installation part 311 is a first positioning groove formed on the water receiving tray 4, and the first positioning protrusion is inserted into the corresponding first positioning groove.

Specifically, the guide installation part 41 is inserted into the positioning installation part 311 to complete the insertion fit between the two. In the assembly, the first positioning grooves formed on both sides of the bottom of the volute 31 cooperate with the first positioning protrusions therebelow. The first positioning protrusion is inserted into the corresponding first positioning groove, and during a process of inserting the first positioning protrusion into the first positioning groove, the first positioning protrusion and the first positioning groove can cooperate with each other to guide and pre-assemble the volute 31 in place.

The two first positioning protrusions are arranged obliquely and close to each other in an embodiment of the present invention.

In particular, the two first positioning protrusions are inclined towards a central position between them, and the inclined first positioning protrusions have the functions of guiding and self-positioning, so that it is more accurate after the volute 31 is mounted.

The angle between the outer sidewalls of the two first positioning protrusions is 30°-60°, so that the two first positioning protrusions can be used together to pre-assemble the volute 31 centrally, which is more conducive to improving the assembly efficiency and precision.

In some embodiments of the present invention, the inner wall of the first positioning groove close to the outer side forms an inclined surface matching the outer sidewall of the first positioning protrusion.

Specifically, for the volute 31, the inclined surface is formed in the first positioning groove to match the first positioning protrusion, and the inclined surface cooperates with the outer sidewall of the first positioning protrusion for better guidance and positioning.

In another embodiment, the cross-sectional area of the first positioning protrusion gradually decreases along the direction away from the water receiving tray 4, the first positioning groove forms a bell mouth structure, and the inner contour of the first positioning groove matches the outer contour of the first positioning protrusion.

In particular, the first positioning groove forms a trapezoidal notch structure, so that for the first positioning protrusion, the size of its top is smaller, which is more conducive for the assembler to easily align and insert the first positioning protrusion into the first positioning groove; and the size of its bottom is larger, so that after the volute 31 is mounted in place, the first positioning protrusion can be more closely fitted with the first positioning groove.

In order to reduce the influence caused by part processing and installation errors, a certain gap is formed between the first positioning protrusion and the first positioning groove. After the volute 31 is pre-assembled by the first positioning protrusion and the first positioning groove, fine adjustment is still possible according to the alignment requirement between the air exhaust port 3002 and the air outlet 1002, so that the air exhaust port 3002 and the air outlet 1002 can be aligned with each other and accurately connected. Since the first positioning groove forms a trapezoidal notch structure, the gap is 5% to 10% of the length of the upper bottom of the trapezoid formed by the first positioning groove. With this arrangement, the volute 31 has a degree of freedom of adjustment in this direction as being fixed, so that the problem of the air exhaust port 3002 is not being aligned with the air outlet 1002 of the housing 1 can be solved.

In another embodiment of the present invention, the guide installation part 41 is a second positioning groove formed on the volute 31, the positioning installation part 311 is a second positioning protrusion provided on the water receiving tray 4, and the second positioning protrusion is inserted into the corresponding second positioning groove.

In particular, a protruding second positioning protrusion can be formed on the volute 31 and inserted into the second positioning groove formed on the water receiving tray 4 for preassembly and positioning.

In an embodiment of the present invention, a flange structure 313 is provided at an end of the volute 31 away from the positioning installation part 311, the flange structure 313 is overlapped on the heat exchanger 2, and the heat exchanger 2 is disposed between the flange structure 313 and the water receiving tray 4.

In particular, in addition to the volute 31 being assembled and mated with the water receiving tray 4, the top of the volute 31 is also assembled and mated to the heat exchanger 2 through the extended flange structure 313 on one side thereof. The flange structure 313 is overlapped on the heat exchanger 2 so that the top of the volute 31 is supported by the heat exchanger 2.

More importantly, the volute 31 is attached to the heat exchanger 2 and covers the leeward side of the heat exchanger 2, so that the negative pressure generated by the air suction port 3001 of the volute 31 can act on the entire leeward side of the heat exchanger 2, thereby fully utilizing the heat exchange area of the heat exchanger 2 for heat exchange with the air.

In an embodiment of the present invention, extension plates 314 are provided on both sides and the bottom of the volute 31, respectively, and the extension plates 314 extend toward the corresponding sides and the bottom of the heat exchanger 2 and abut against the heat exchanger 2. The volute 31 and the heat exchanger 2 are separated by the extension plates 314 and a negative pressure cavity is formed between the volute 31 and the heat exchanger 2. The rotation of the centrifugal vanes 32 creates a negative pressure in the negative pressure cavity. Under the action of the negative pressure formed, the entire surface of the heat exchanger 2 can be uniformly supplied with air from an air inlet surface to ensure that the heat exchanger 2 can exchange heat uniformly, thereby improving the heat exchange efficiency.

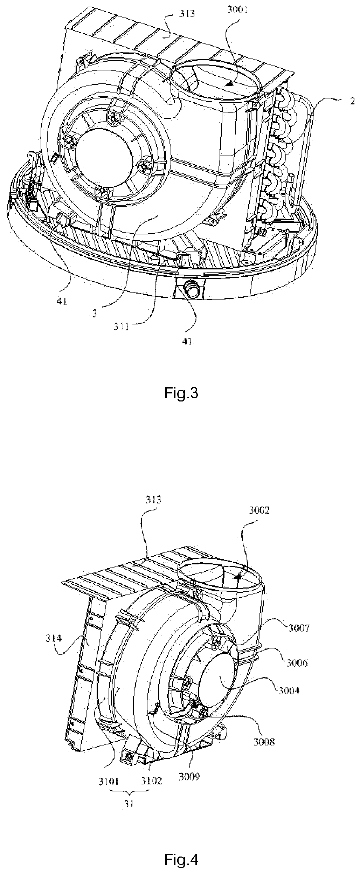

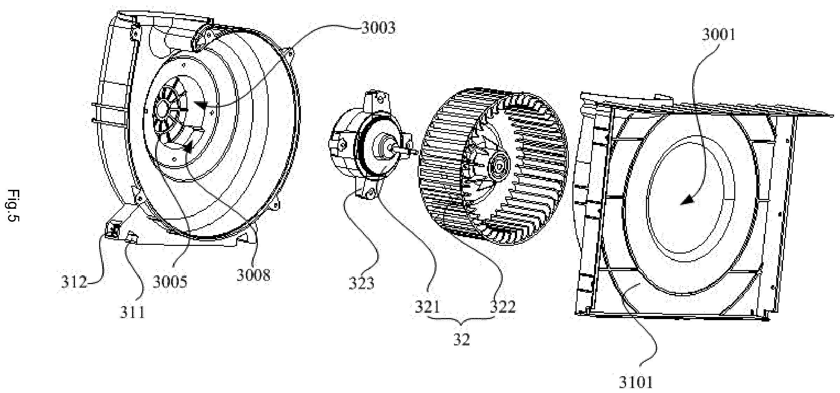

In an embodiment of the present invention, as shown in Fig.4 and Fig.5, the volute 31 is also required to meet the installation requirements of the centrifugal vanes 32. The centrifugal vanes 32 comprises a motor 321 and fan blades 322 arranged on the shaft of the motor 321. In order to satisfy the requirement that the motor 321 is installed into the volute 31, the volute 31 is constructed of comprising a first volute 3101 and a second volute 3102, an air suction port 3001 is opened on the first volute 3101 and a mounting groove 3003 is formed on the inner wall of the second volute 3102. The first volute 3101 and the second volute 3102 are fixed together to form the air outlet 1002; the motor 321 is disposed in the mounting groove 3003, and the fan blades 322 are disposed between the first volute 3101 and the second volute 3102 and cover the air suction port 3001.

In particular, the mounting groove 3003 is formed in the second volute 3102, so that the motor 321 could be installed on the inner wall of the volute 31, with these arrangements, the motor 321 can be installed without additional brackets. The use of the mounting groove 3003 to install the motor 321 not only reduces the increase in manufacturing cost caused by the addition of brackets, but also that the motor 321 is built into the volute 31 could effectively reduce the overall volume of the centrifugal fan 3.

In some embodiments of the present invention, the air suction port 3001 is disposed opposite to the mounting groove 3003, the cross section of the mounting groove 3003 is circular, and the center line of the mounting groove 3003 is collinear with the center line of the air suction port 3001.

In particular, the mounting groove 3003 directly opposite to the air suction port 3001 could maximize the use of the opening of the air suction port 3001 to intake air under the suction force generated by the fan blades 322 to improve the air supply capacity.

In another embodiment of the present invention, the second volute 3102 is provided with an outwardly projecting portion 3004 and the mounting groove 3003 is formed on the projecting portion 3004.

In particular, the projecting portion 3004 is formed on the second volute 3102 so that the mounting groove 3003 could be formed on the inner wall of the second volute 3102 to satisfy the requirement that the motor 321 is installed in the volute 31. And the formation of the mounting groove 3003 in the projecting portion 3004 could reduce the influence on the rotation of the fan blades 322 caused by the internal installation of the motor 321 in the volute 31.

In an embodiment of the present invention, the groove bottom surface of the mounting groove 3003 opposite to the motor 321 is provided with a first reinforcing rib 3005, and the first reinforcing rib 3005 can strengthen the structural strength of the mounting groove 3003 on the inner wall of the second volute 3102 to meet the installation requirement of the motor 321.

In an embodiment of the present invention, the outer surface of the second volute 3102 is provided with a plurality of second reinforcing ribs 3006 around the projecting portion 3004. By arranging the second reinforcing ribs 3006 on the outer surface of the second volute 3102, the overall structural strength of the second volute 3102 on its outer surface can be improved to better support the motor 321 in the second volute 3102 while rotating.

In order to further enhance the overall structural strength of the second volute 3102, the outer surface of the second volute 3102 is provided with an outwardly protruding reinforcing ring 3007 around the projecting portion 3004, and the second reinforcing ribs 3006 and the reinforcing ring 3007 are alternately arranged. The cooperation of the second reinforcing ribs 3006 and the reinforcing ring 3007 around the projecting portion 3004 could increase the structural strength of the circumference of the projecting portion 3004. A plurality of the reinforcing ring 3007s could also be provided with around the projecting portion 3004 according to various requirements.

In some embodiments of the present invention, since the motor 321 is installed in the volute 31, a wire hole 3008 is opened on the projecting portion 3004 to facilitate the connection of the power line of the motor 321 to an external electrical control board through which the power line of the motor 321 passes. To facilitate the layout and wiring, the outer surface of the second volute 3102 is also provided with a hook 3009 for positioning the power line of the motor 321. The power line of the motor 321 is output from the inside of the volute 31 through the wire hole 3008 and hung on the hook 3009 to facilitate the installation and connection.

In some embodiments, to reliably install and fix the motor 321, the side wall of the mounting groove 3003 is provided with a stepped surface (not shown in the figures), fixing holes are opened on the stepped surface, the outer periphery of the motor 321 is provided with outwardly extending connecting arms 323, and the connecting arms 323 are fixed to the fixing holes by screws.

In particular, the end of the motor 321 is inserted into the mounting groove 3003, the connecting arms 323 extending from the outer periphery of the motor 321 are fixed to the fixing holes on the stepped surface by screws to ensure that the motor 321 is reliably fixed to the second volute 3102.

In an embodiment of the present invention, there is also provided a split heat pump water heater comprising a water tank 1000 and a heat pump unit 2000, wherein the water tank 1000 and the heat pump unit 2000 are provided independently of each other with refrigerant pipes and cables connected therebetween. For the specific connection of the split heat pump water heater, reference can be made to heat pump water heaters in the art, which will not be limited or repeated here.

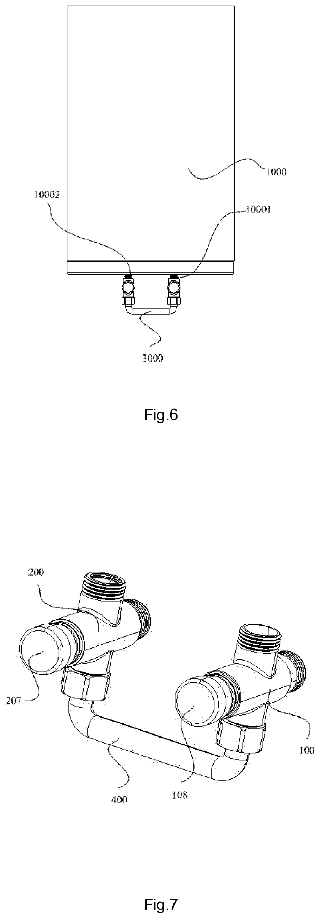

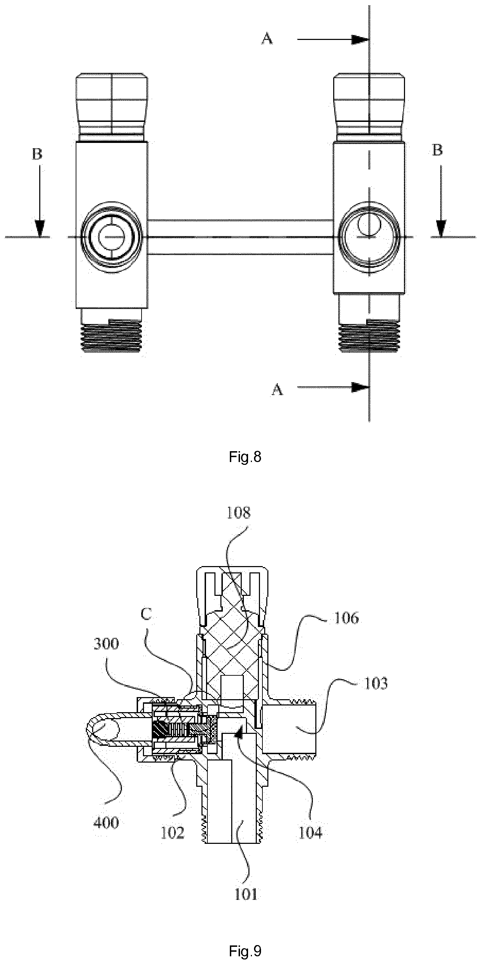

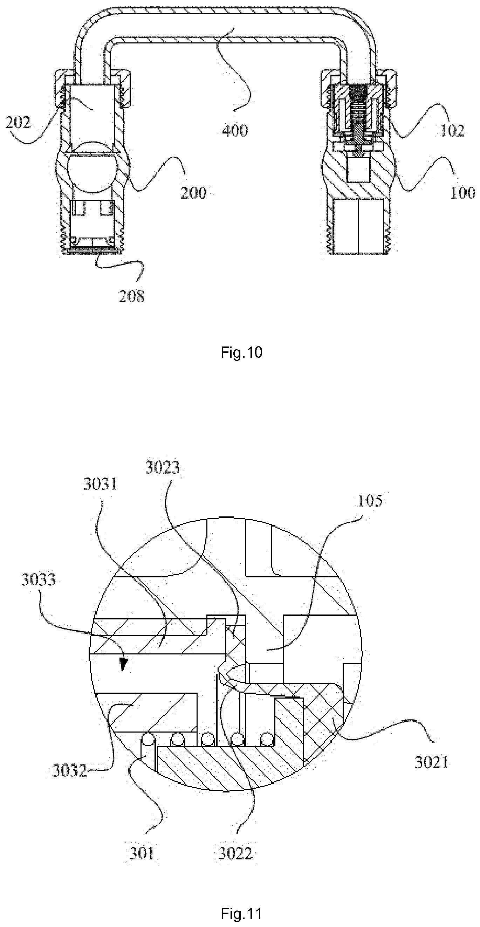

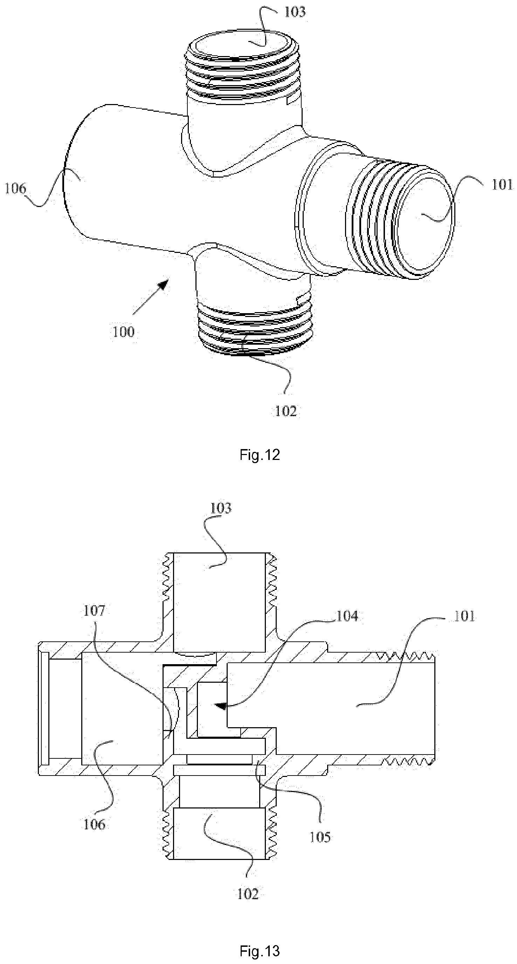

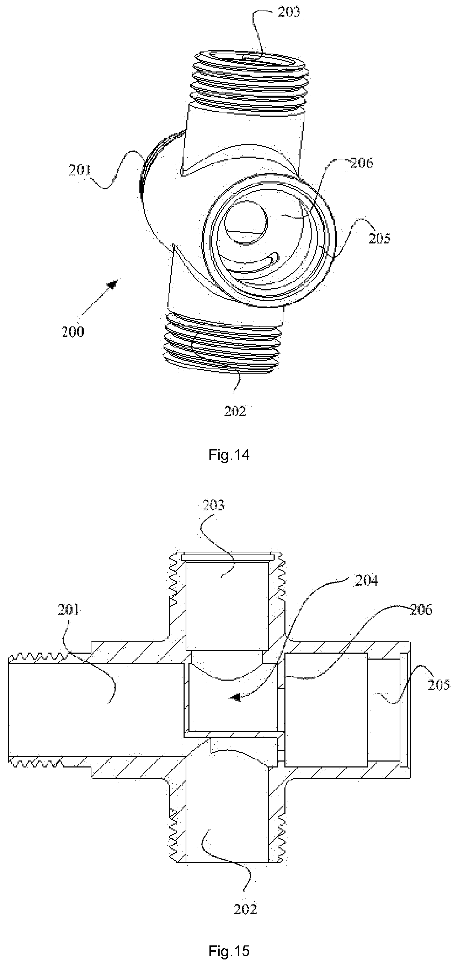

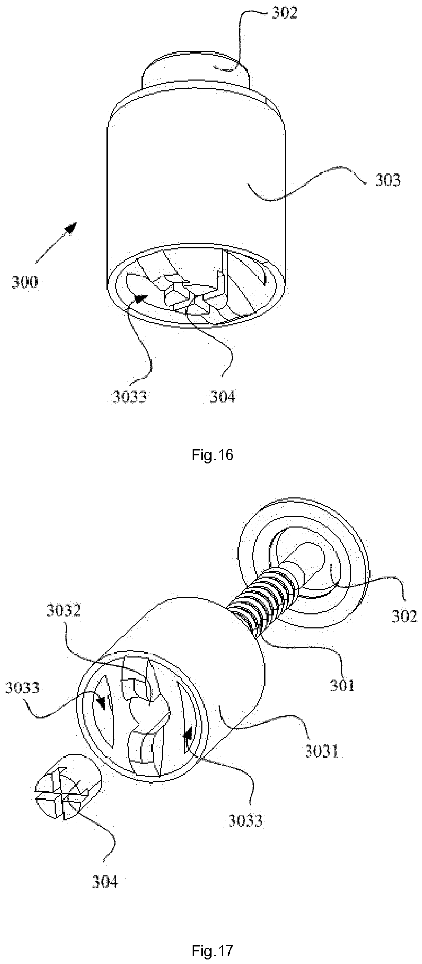

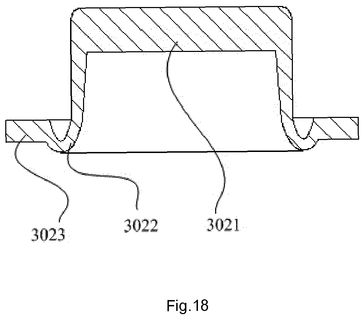

Wherein, as shown in Fig.6-18, in order to improve the leak-proof performance of the water tank, the split heat pump water heater further comprises a leak-proof device 3000, which comprises:
a first water pipe 100 provided with a first water inlet pipe end 101, a first connecting pipe end 102 and a first water outlet pipe end 103, in which a first connecting flow passage 104 is formed, a first end of the first connecting flow passage 104 communicating with the first water inlet pipe end 101, and a second end of the first connecting flow passage 104 communicating with the first water outlet pipe end 103;
a second water pipe 200 provided with a second water inlet pipe end 201, a second connecting pipe end 202 and a second water outlet pipe end 203 communicating with each other, the second water inlet pipe end 201 being provided with a one-way valve 208 used to control the one-way water flow from the second water inlet pipe end 201 to the second water pipe 200;
a pressure on/off valve 300 disposed in the first connecting pipe end 102 and used to open or close the second end of the first connecting flow passage 104 according to the water pressure at the first connecting pipe end 102; and
a connecting pipe 400 connected between the first pipe connecting pipe end 102 and the second pipe connecting pipe end 202.

In particular, the water tank 1000 comprises the housing 1 and an inner tank disposed in the housing 1, the water inlet pipe 10001 and the water outlet pipe 10002 are disposed on the inner tank; the leak-proof device 3000 mainly includes the first water pipe 100, the second water pipe 200, the pressure on/off valve 300 and the connecting pipe 400.

The first water inlet pipe end 101 of the first water pipe 100 is configured to be connected to an external water supply pipe to introduce tap water from the municipal pipe network, the first water outlet pipe end 103 of the first water pipe 100 is configured to be connected to the water inlet pipe 10001 of the water tank at the user's house to supply tap water to the inner tank.

The second water inlet pipe end 201 of the second water pipe 200 is configured to be connected to the water outlet pipe 10002 of the water tank to discharge water heated in the inner tank; the second water outlet pipe end 203 of the second water pipe 200 is connected to a water terminal at the user's house to supply water.

The first water pipe 100 and the second water pipe 200 are connected by the connecting pipe 400 so that the first connecting pipe end 102 and the second connecting pipe end 202 communicate with each other.

The pressure on/off valve 300 in the first connecting pipe end 102 can perform a corresponding action according to the water pressure at the first connecting pipe end 102 and the water pressure generated at the second end of the first connecting flow passage 104 to prevent water leakage.

When the user uses water through the water terminal, the second water pipe 200 is connected to the water terminal through the second water outlet pipe end 203 to discharge water upward, during which the water pressure in the second water pipe 200 decreases compared with the pressure of the discharged water from the first water inlet pipe end 101; at the same time, the first connecting pipe end 102 communicates with the second connecting pipe end 202 through the connecting pipe 400, so that the water pressure at the first connecting pipe end 102 also corresponds to decrease. The water introduced from the first water inlet pipe end 101 is discharged through the second end of the first connecting flow passage 104, opens the pressure on/off valve 300 and finally flows into the water tank through the first water outlet pipe end 103.

After the user closes the water terminal, the tap water pressure of the external water supply pipe is transmitted to the second water pipe 200 to gradually increase the water pressure of the first connecting pipe end 102 to finally match the water pressure in the first water inlet pipe end 101. At this time, the pressure on/off valve 300 is automatically reset to close the second end of the first connecting flow passage 104.

At this time, if the inner tank of the water tank itself breaks and leaks, the leakage of the water terminal does not change the water pressure inside the second water pipe 200 because the second water inlet pipe end 201 is provided with the one-way valve 208, so that the pressure on/off valve 300 is always in a state of closing the second end of the first connecting flow passage 104, which means that if the water tank is damaged, no serious leakage caused by the introduction of tap water into the water tank will occur.

By configuring the pressure on/off valve 300 in the first water pipe 100, the pressure on/off valve 300 is completely disposed in the first water pipe 100, the first water pipe 100 is connected to the water supply pipe (tap water pipe) at the user's house through the first water inlet pipe end 101, the first water pipe 100 and the second water pipe 200 are respectively installed on the water tank at the user's house. When the water tank is in use, the water introduced through the first water pipe 100 is processed by the water tank and then discharged from the second water pipe 200; at this time, the first connecting pipe end 102 and the second connecting pipe end 202 are connected by the connecting pipe 400, the water pressure at the first connecting pipe end 102 is lower than the water pressure at the second connecting pipe end 202. At this time, the pressure on/off valve 300 opens the second end of the first connecting flow passage 104 so that the first connecting pipe end 102 and the second connecting pipe end 202 communicate with each other to realize water supply, but the water tank is in a water cut-off condition, the water pressure in the first pipe gradually equals the water pressure in the second pipe so that the water pressure at the first water inlet pipe end 101 and at the first connecting pipe end 102 reaches equilibrium. At this time, the pressure on/off valve 300 is automatically reset and shuts off the second end of the first connecting flow passage 104; in the case of a water leak in the water tank, since the second water inlet pipe end 201 is provided with the one-way valve 208, the water pressure at the first water inlet pipe end 101 and at the first connecting pipe end 102 is still maintained in the balanced state, thereby ensuring that the water supply pipe does not discharge water through the first water pipe 100, to reduce leakage accidents and improve the reliability of electrical appliances.

In some embodiments of the present invention, the pressure on/off valve 300 mainly relies on the water pressure difference between the first water inlet pipe end 101 and the first connecting pipe end 102 to realize mechanical on/off control.

In this respect, the pressure on/off valve 300 comprises a spring 301 and a flexible sealing member 302. The flexible sealing member 302 is disposed in the first connecting pipe end 102 and is used to open or close the second end of the first connecting flow passage 104. The spring 301 is disposed in the first connecting pipe end 102 and is used to exert an elastic force on the flexible sealing member 302 towards the second end of the first connecting flow passage 104.

In particular, the flexible sealing member 302 is disposed opposite to the second end of the first connecting flow passage 104 and is used to block the second end of the first connecting flow passage 104. At the first connecting pipe end 102, the flexible sealing member 302 can be deformed because its two sides are subjected to water pressures from different pipe ends, so as to open or close the second end of the first connecting flow passage 104.

In particular, when the user uses water through the water terminal, the water pressure at the first connecting pipe end 102 decreases; under the action of the water pressure at the second end of the first connecting flow passage 104, the flexible sealing member 302 can be deformed to open the second end of the first connecting flow passage 104, and water flowing into the first water pipe 100 from the first water inlet pipe end 101 is discharged from the second end of the first connecting flow passage 104 and finally flows into the water tank from the first water outlet pipe end 103.

When the user closes the water terminal and stops using water, the water pressure in the first connecting pipe end 102 gradually increases to balance the water pressure at the second end of the first connecting flow passage 104, and under the action of the spring 301, the flexible sealing member 302 can be deformed toward the second end of the first connecting flow passage 104 to finally block the second end of the first connecting flow passage 104.

In some embodiments of the present invention, to facilitate the installation of the flexible sealing member 302, the flexible sealing member 302 comprises a sealing portion 3021, an elastic deformation portion 3022 and an installation fixing portion 3023, wherein the elastic deformation portion 3022 is connected between the sealing portion 3021 and the installation fixing portion 3023, the sealing portion 3021 is disposed opposite to the second end of the first connecting flow passage 104, and the installation fixing portion 3023 is disposed on the inner wall of the first connecting pipe end 102.

In particular, the sealing portion 3021 of the flexible sealing member 302 is used to block the second end of the first connecting flow passage 104, the elastic deformation portion 3022 is used to satisfy the requirement that the flexible sealing member 302 can open or close the second end of the first connecting flow passage 104 under different water pressure, and the installation fixing portion 3023 is used for its installation in the first connecting pipe end 102.

In some embodiments of the present invention, the pressure on/off valve 300 further comprises an installation support member 303, wherein the installation support member 303 is disposed in the first connecting pipe end 102, the spring 301 is disposed between the installation support member 303 and the sealing portion 3021, and the spring 301 is used to exert the elastic force toward the second end of the first connecting flow passage 104 on the sealing portion 3021.

In particular, in order to facilitate the installation of the spring 301 in the first water inlet pipe end 101, the installation support member 303 can be provided in the first water inlet pipe end 101 by means of a threaded connection or interference fit. The spring 301 is supported by the installation support member 303 so that the spring 301 can provide effective elasticity to the sealing portion 3021.

The installation support member 303 includes an outer sleeve 3031 and an inner sleeve 3032, wherein the outer sleeve 3031 is sleeved on the outside of the inner sleeve 3032, a water flow channel 3033 is formed between the outer sleeve 3031 and the inner sleeve 3032, the outer sleeve 3031 is threaded in the first connecting pipe end 102, and the spring 301 is disposed in the inner sleeve 3032.

In particular, during assembly, the outer sleeve 3031 is installed in the first connecting pipe end 102 in a threaded manner, and since the outer sleeve 3031 and the inner sleeve 3032 are connected to each other, the installation spring 301 can be supported by the inner sleeve 3032.

A connecting rod can be used between the outer sleeve 3031 and the inner sleeve 3032 to realize a hanging arrangement of the inner sleeve 3032 in the outer sleeve 3031 to further form a water flow channel 3033.

The water flow channel 3033 can satisfy the water pressure in the connecting pipe 400 to be directly transmitted to the flexible sealing member 302 to ensure a smooth water passage and accurate water pressure transmission.

In some embodiments of the present invention, to fix and install the flexible sealing member 302, the first water pipe 100 is provided with a mounting ring 105 and the installation fixing portion 3023 is sandwiched between the mounting ring 105 and the outer sleeve 3031.

In particular, the mounting ring 105 is provided on one side of the inner wall of the first water pipe 100 close to the first connecting flow passage 104, and the mounting ring 105 cooperates with the outer sleeves 3031 to fix the flexible sealing member 302.

In the assembly process, the flexible sealing member 302 is put into the first connecting pipe end 102 and abutted against the mounting ring 105, and then the outer sleeve 3031 is put into the first connecting pipe end 102, and after the outer sleeve 3031 is installed in place, the installation fixing portion 3023 is sandwiched between the mounting ring 105 and the outer sleeve 3031, thereby realizing a firm fixation and installation of the flexible sealing member 302.

In some embodiments of the present invention, the inner sleeve 3032 is further provided with an adjustment member 304, and the adjustment member 304 is screwed into the inner sleeve 3032 and leans against the spring 301.

In particular, there may be a difference in water pressure of water supply pipe networks in different regions; therefore, it is necessary to adjust the elastic force generated by the spring 301 on the flexible sealing member 302 according to the local water pressure to ensure that the flexible sealing member 302 can play a good role in sealing the first connecting flow passage 104.

In fact, when the operator installs the water heater at the user's house, before the connecting pipe 400 is connected to the first water pipe 100 and the second water pipe 200, the shape variables of the spring 301 in an initial state can be changed by adjusting the adjustment member 304, so as to satisfy the water pressure requirement according to the local water supply network. The adjustment member 304 is preferably a bolt or a similar threaded component.

The connecting pipe 400 can be connected between the first water pipe 100 and the second water pipe 200 after the initial shape variable of the spring 301 in the initial state being adjusted.

In an embodiment of the present invention, in order to facilitate the user to directly operate the leak-proof device to switch the water flows, the first water pipe 100 is provided with a first auxiliary joint 106, and the first auxiliary joint 106 is provided with a first partition plate 107 therein, a first water intake opening (not shown in the figures) and a first water outlet opening (not shown in the figures) are provided on the first partition plate 107; the second end of the first connecting flow passage 104, the first water intake opening, the first water outlet opening and the first water outlet pipe end 103 are connected in sequence;
a first on/off valve 108 is arranged in the first auxiliary joint 106, and the first on/off valve 108 is arranged opposite to the first partition plate 107 and is used for open or close the first water intake opening and/or the first water outlet opening.

When the user needs to completely close the leak-proof device, the first on/off valve 108 can be operated so that the water flow between the first water inlet pipe end 101 and the first water outlet pipe end 103 can be actively controlled by using the first on/off valve 108 to open or close the first water intake opening and/or the first water outlet opening, further to completely close the leak-proof device as needed, so that it is more conducive to further improve the reliability of use.

The specific structure of the first on/off valve 108 may take the form of a conventional structure of a water valve and will not be limited or repeated here.

In another embodiment of the present invention, the second water pipe 200 is also provided with a second connecting flow passage 204, a first port of the second connecting flow passage 204 is connected to the second water inlet pipe end 201, and the second port of the second connecting flow passage 204 is connected to the second connecting pipe end 202 and the second water outlet pipe end 203, respectively.

In particular, for the second water inlet pipe end 201, in order to satisfy the requirement of supplying water to the second water outlet pipe end 203 and the second connecting pipe end 202 together, the second water pipe 200 is configured with the second connecting flow passage 204 to realize the allocation of water flow.

Similarly, in order to completely close the second water pipe 200, the second water pipe 200 is provided with a second auxiliary joint 205, the second auxiliary joint 205 is provided with a second partition plate 206, and the second partition plate 206 is provided with a second water inlet port and a second water outlet port, and the second port of the second connecting flow passage 204 is the second water inlet port, and the second water outlet port respectively communicating with the second water outlet pipe end 203 and the second connecting pipe end 202 respectively; a second on/off valve 207 is disposed in the second auxiliary joint 205, and the second on/off valve 207 is disposed opposite to the second partition plate 206 and is used to open or close the second water inlet port and/or the second water outlet port.

When the user needs to completely close the second water pipe 200, the second on/off valve 207 can be operated so that the water flow between the second water inlet pipe end 201 and the second connecting pipe end 202, and between the second water outlet pipe end 203 and the second connecting pipe end 202 can be actively controlled by using the second on/off valve 207 to further completely close the second water pipe 200, so that it is more conducive to further improve the reliability of use.

The specific structure of the second on/off valve 207 may take the form of a conventional structure of a water valve, and will not be limited and repeated here.

The above embodiments are used only to illustrate and not to limit the technical solutions of the present invention; although the present invention has been described in detail with reference to the above embodiments, those skilled in the art will still be able to understand the above embodiments. Modifications are made to the technical solutions described, or equivalent substitutions are made for some of the technical features; and these modifications or substitutions do not cause the essence of the corresponding technical solutions to deviate from the spirit and scope of the technical solutions claimed in the present invention.

## Claims

1. A heat pump unit, **characterized in that**, it comprises:
a housing (1) with an air inlet (1001) and an air outlet (1002) opened thereon;
an heat exchanger (2);
a centrifugal fan (3) comprising a volute (31) and centrifugal vanes (32), wherein the volute (31) is provided with an air suction port (3001) and an air exhaust port (3002), the centrifugal vanes (32) are arranged in the volute (31) and the volute (31) is provided with a positioning installation part (311);and
a water receiving tray (4) being provided with a guide installation part (41);
wherein the heat exchanger (2) and the centrifugal fan (3) are located in the housing (1), and the heat exchanger (2) is disposed on the water receiving tray (4), the air suction port (3001) is arranged opposite to the heat exchanger (2), the air exhaust port (3002) is connected to the air outlet (1002); the guide installation part (41) and the positioning installation part (311) are in an insert fit and the guide installation part (41) is constructed such that the positioning installation part (311) is slidably inserted onto the guide installation part (41).

2. The heat pump unit according to claim 1, **characterized in that**, the bottom of the volute (31) is provided with two positioning installation parts (311), and the water receiving tray (4) is provided with guide installation parts (41) corresponding to the positioning installation parts (311).

3. The heat pump unit according to claim 2, **characterized in that**, the guide installation part (41) is a first positioning protrusion provided on the volute (31), and the positioning installation part (311) is a first positioning groove formed on the water receiving tray (4), and the first positioning protrusion is inserted into the corresponding first positioning groove.

4. The heat pump unit according to claim 3, **characterized in that**, the two first positioning protrusions are arranged obliquely and close to each other.

5. The heat pump unit according to claim 4, **characterized in that**, the angle between the outer sidewalls of the two first positioning protrusions is 30°-60°.

6. The heat pump unit according to claim 4, **characterized in that**, the inner wall of the first positioning groove close to the outer side forms an inclined surface matching the outer sidewall of the first positioning protrusion.

7. The heat pump unit according to any of claims 4 to 6, **characterized in that**, the cross-sectional area of the first positioning protrusion gradually decreases along the direction away from the water receiving tray (4), the first positioning groove forms a bell mouth structure, and the inner contour of the first positioning groove matches the outer contour of the first positioning protrusion.

8. The heat pump unit according to claim 2, **characterized in that**, the guide installation part (41) is a second positioning groove formed on the volute (31), the positioning installation part (311) is a second positioning protrusion provided on the water receiving tray (4), and the second positioning protrusion is inserted into the corresponding second positioning groove.

9. The heat pump unit according to any of claims 1 to 8, **characterized in that**, the volute (31) is opened with a mounting hole (312) penetrating the positioning installation part (311), and the guide installation part (41) is provided with a threaded hole, and a screw is passed through the mounting hole (312) and is screwed into the threaded hole.

10. The heat pump unit according to any of claims 1 to 9, **characterized in that**, a flange structure (313) is provided at an end of the volute (31) away from the positioning installation part (311), the flange structure (313) is overlapped on the heat exchanger (2), and the heat exchanger (2) is disposed between the flange structure 313 and the water receiving tray (4).

11. A split heat pump water heater comprising a water tank (1000) and a heat pump unit (2000) and the water tank (1000) and the heat pump unit (2000) are connected by refrigerant pipes and cables, **characterized in that**, the heat pump unit (2000) is the heat pump unit according to any one of claim 1 to 10.

12. The split heat pump water heater according to claim 11, **characterized in that**, the water tank (1000) comprises the housing (1) and an inner tank disposed in the housing (1), the water inlet pipe (10001) and the water outlet pipe (10002) are disposed on the inner tank;
the split heat pump water heater further comprises a leak-proof device (3000);
the leak-proof device (3000) comprising:
a first water pipe (100) provided with a first water inlet pipe end (101), a first connecting pipe end (102) and a first water outlet pipe end (103), in which a first connecting flow passage (104) is formed, a first end of the first connecting flow passage (104) communicating with the first water inlet pipe end (101), and a second end of the first connecting flow passage (104) communicating with the first water outlet pipe end (103);
a second water pipe (200) provided with a second water inlet pipe end (201), a second connecting pipe end (202) and a second water outlet pipe end (203) communicating with each other, the second water inlet pipe end (201) being provided with a one-way valve (208) used to control the one-way water flow from the second water inlet pipe end (201) to the second water pipe (200);
a pressure on/off valve (300) disposed in the first connecting pipe end (102) and used to open or close the second end of the first connecting flow passage (104) according to the water pressure at the first connecting pipe end (102); and
a connecting pipe (400) connected between the first pipe connecting pipe end (102) and the second pipe connecting pipe end (202);
wherein the first water outlet pipe end (103) is connected to the water inlet pipe (1003) and the second water inlet pipe end (201) is connected to the water outlet pipe (1004).
